# DEMANDE DE BREVET EUROPEEN

(11) **EP 2 579 106 A1**
(43) Date de publication de la demande: **10.04.2013**
(21) Numéro de dépôt: 11183805.8
(22) Date de dépôt: 04.10.2011
(51) Int. Cl.: G04B 29/02, B29C 33/40

(54) **Formage de composant d'horlogerie transparent monobloc**

(71) Demandeur: ETA SA Manufacture Horlogère Suisse, 2540 Grenchen (CH)
(72) Inventeur: Poffet, Christian, 1735 Giffers (CH); Gaechter, Philipp, 4452 Itingen (CH); Tinguely, Xavier, 2046 Fontaines (CH)
(74) Mandataire: Giraud, Eric

(57) **Abrégé**

Procédé de formage d'un composant d'horlogerie (1) transparent, comportant des surfaces supérieure (2) et inférieure (3):
- on choisit un matériau (5) transparent et polymérisable: «Cover Form ® »;
- on applique sur une plaque (15) un moule femelle souple (9), dont une surface de contact (10) est le négatif de la surface inférieure (3), bordée par un rebord (11), ce moule (9) comportant un réseau capillaire (14);
- on délimite une cavité (17) par juxtaposition étanche du rebord (11) avec une plaque (6) dont une surface de contact (7) est le négatif de la surface supérieure (2),
- on injecte au travers du réseau capillaire (14) le matériau (5), pour remplir la cavité (17);
- on y polymérise le matériau (5) pour l'obtention d'un composant (1) rigide;
- on détache le composant (1) des plaques et du moule souple (9) par déformation de ce dernier.

On augmente la dureté en insolant ledit composant (1) aux UV.

## Description

### Domaine de l'invention

L'invention concerne un procédé de formage d'un composant d'horlogerie transparent, monobloc et monocouche comportant une surface supérieure et une surface inférieure reliées par un bord, ledit bord s'étendant selon l'épaisseur dudit composant.

L'invention concerne encore l'application de ce procédé à la confection d'un composant d'horlogerie.

L'invention concerne encore un mouvement d'horlogerie comportant au moins un composant réalisé selon ce procédé.

L'invention concerne encore une pièce d'horlogerie comportant au moins un composant réalisé selon ce procédé.

L'invention concerne encore une pièce d'horlogerie dite mystérieuse comportant au moins une platine réalisée selon ce procédé.

### Arrière-plan de l'invention

La substitution de composants transparents d'origine minérale par des composants transparents en matière plastique moulés permet de disposer d'une alternative fonctionnelle à bas coût de production, et toute indépendance de certaines sources d'approvisionnement de matériaux transparents de haut de gamme.

Toutefois, les pièces transparentes moulées sont, d'une part relativement épaisses car il est délicat de mouler des pièces très fines dans une qualité convenable et reproductible. D'autre part, la résistance à l'usure, et particulièrement aux rayures, de ces composants en plastique connus, est très médiocre. Leur utilisation pour des composants d'habillage d'une pièce d'horlogerie, carrure, lunette, ou glace, est donc limitée dans le temps.

Cette faible résistance à l'usure empêche, encore, de réaliser des composants avec des angles vifs, qui s'émousseraient trop vite dans le temps au contact de l'utilisateur, de ses vêtements, et des objets de son cadre de vie habituel.

### Résumé de l'invention

L'invention se propose de mettre en oeuvre un procédé permettant l'obtention économique, avec une haute précision dimensionnelle, de composants d'horlogerie transparents et monobloc.

Tout particulièrement, l'invention a pour but de réaliser un tel composant, avec une dureté superficielle supérieure à celle des composants d'horlogerie usuellement obtenus par moulage de matériaux plastiques.

Un but particulier est encore de réaliser des composants externes à une pièce d'horlogerie, comportant des angles vifs, par exemple avec une taille à facettes ou une taille diamant, et résistants à l'usure.

A cet effet, l'invention concerne un procédé de formage d'un composant d'horlogerie transparent, monobloc et monocouche comportant une surface supérieure et une surface inférieure reliées par un bord , ledit bord s'étendant selon l'épaisseur dudit composant , caractérisé en ce que :
- on choisit, parmi le « Cover Form ® » de « Evonik Röhm ® » ou le ou le « Nanocryl® » de « Hanse Chemie® » ou un polymétacrylate ou un polyacryl, un premier matériau de moulage transparent et polymérisable pour la réalisation dudit composant ;
- on choisit, parmi le « PDMS® », ou le polyméthylsiloxane, un second matériau de moulage, pour réaliser un moule souple pour le moulage dudit premier matériau de moulage et pour autoriser son démoulage ;

- on réalise une plaque dont une surface de contact est le négatif de ladite surface supérieure ;
- on réalise un moule femelle souple dans ledit second matériau de moulage, ledit moule femelle comportant :
- une première surface de contact constituant un moule femelle de ladite surface inférieure;
- autour de ladite première surface de contact, un rebord comportant une première surface d'appui agencée pour coopérer de façon complémentaire avec ladite surface de contact de ladite plaque ;
- et une deuxième surface d'appui opposée à ladite première surface;
- on réalise dans ledit moule femelle un réseau capillaire d'injection et de dégazage;
- on applique ladite deuxième surface d'appui dudit moule femelle sur une plaque support ;
- on positionne, à une distance de ladite première surface correspondant à l'épaisseur requise pour ledit composant, et exactement positionnée par rapport à ladite première surface, ladite plaque avec sa dite surface de contact faisant face à ladite première surface de contact dudit moule femelle, avec ladite première surface d'appui en contact étanche avec ladite surface de contact de ladite plaque;
- on injecte au travers dudit réseau capillaire d'injection ledit premier matériau de moulage, de façon à remplir entièrement dudit premier matériau de moulage une cavité délimitée par ladite surface de contact de ladite plaque ladite première surface de contact dudit moule femelle et ledit rebord en appui étanche par sa dite première surface d'appui sur ladite surface de contact;
- on laisse se polymériser ledit premier matériau injecté dans ladite cavité jusqu'à l'obtention d'un dit composant rigide;
- on éloigne ladite plaque et ladite plaque support ;
- on détache ledit composant dudit moule femelle souple par déformation de ce dernier.

Selon une caractéristique de l'invention, on choisit ledit matériau « Cover Form ® » de « Evonik Röhm ® » comme dit premier matériau de moulage polymérisable pour la réalisation dudit composant.

Selon une autre caractéristique de l'invention, on soumet ledit premier matériau injecté dans ladite cavité, pendant sa polymérisation, à une température comprise entre 100 °C et 120 °C, pendant 10 à 20 secondes.

Selon une autre caractéristique de l'invention, on réalise ladite plaque transparente aux rayons ultra-violets, et, après injection dudit premier matériau de moulage, on insole ledit composant par un rayonnement ultra-violet, ou bien au travers de ladite plaque transparente, ou bien après extraction dudit composant polymérisé de ladite cavité, pour obtenir une dureté améliorée dudit composant rigide.

Selon une autre caractéristique de l'invention, on choisit ledit second matériau de moulage transparent aux rayons ultra-violets de façon à obtenir un dit moule femelle souple transparent aux rayons ultra-violets, et on choisit ladite plaque support transparente aux rayons ultra-violets, de façon à insoler par un rayonnement ultra-violet, en plus de ladite insolation au travers de ladite plaque transparente, ledit premier matériau injecté dans ladite cavité, au travers de ladite plaque support et dudit moule femelle souple, pour obtenir une dureté améliorée dudit composant rigide.

Selon une autre caractéristique de l'invention, on choisit le dit matériau « PDMS® », comme dit second matériau de moulage.

Selon une autre caractéristique de l'invention, on applique une force de serrage sur ladite plaque et sur ladite plaque d'appui pendant l'injection dudit premier matériau de moulage dans ladite cavité, et pendant la polymérisation dudit premier matériau de moulage pour la réalisation dudit composant.

L'invention concerne encore l'application de ce procédé à la confection d'un composant d'horlogerie choisi parmi : glace, couronne, carrure, platine, pont, roue, roue d'échappement, ancre, masse oscillante.

L'invention concerne encore un mouvement d'horlogerie comportant au moins un tel composant réalisé selon ce procédé.

L'invention concerne encore une pièce d'horlogerie comportant au moins un tel composant réalisé selon ce procédé.

L'invention concerne encore une pièce d'horlogerie dite mystérieuse comportant au moins une platine réalisée selon ce procédé.

### Description sommaire des dessins

D'autres caractéristiques et avantages de l'invention apparaîtront mieux à la lecture de la description détaillée qui va suivre, en référence aux dessins annexés, où :
- la figure 1 représente, de façon schématisée sous forme d'un organigramme, la succession des opérations de mise en oeuvre du procédé ;
- la figure 2 représente, de façon schématisée et en coupe selon l'épaisseur du composant à former et sensiblement perpendiculairement à ses surfaces principales, les outillages de réalisation dans leur configuration pendant le formage du composant, dans une première variante sans insolation au travers de ces outillages ;
- la figure 3 représente, de façon similaire à la figure 2, une deuxième variante où le composant est insolé au travers d'un des outillages ;
- la figure 4 représente, de façon similaire à la figure 2, une troisième variante où le composant est insolé au travers de plusieurs des outillages ;
- la figure 5 représente, sous la forme d'un schéma-blocs, une pièce d'horlogerie comportant au moins un composant réalisé selon l'invention ;
- la figure 6 représente une coupe au voisinage de la surface supérieure d'un composant réalisé selon une variante particulière de l'invention.

### Description détaillée des modes de réalisation préférés

L'invention concerne un procédé de formage d'un composant d'horlogerie 1 transparent, comportant des surfaces supérieure 2 et inférieure 3, reliées par un bord 4, le bord 4 s'étendant selon l'épaisseur du composant 1.

Pour mettre en oeuvre ce procédé, on réalise les étapes suivantes :
- A. on choisit un matériau 5 transparent et polymérisable pour la réalisation du composant 1, de préférence le «Cover Form ® » de « Evonik ® »; on peut encore choisir ce premier matériau de moulage 5 transparent et polymérisable pour la réalisation du composant 1, parmi le « Nanocryl® » de « Hanse Chemie® » ou un polymétacrylate ou un polyacryl;
- B : on réalise un moule femelle souple 9, dont une surface de contact 10 est le négatif de la surface inférieure 3, bordée par un rebord 11, ce moule 9 comportant un réseau capillaire 14;
- C :on applique sur une plaque support 15 ce moule femelle souple 9, dont une surface de contact 10 est le négatif de la surface inférieure 3, bordée par un rebord 11, ce moule 9 comportant un réseau capillaire 14;
- D : on délimite une cavité 17 par juxtaposition étanche du rebord 11 avec une plaque 6 dont une surface de contact 7 est le négatif de la surface supérieure 2,
- E : on injecte au travers du réseau capillaire 14 le matériau 5, pour remplir la cavité 17;
- F : on y polymérise le matériau 5 pour l'obtention d'un composant 1 rigide;
- G : on détache le composant 1 des plaques et du moule souple 9 par déformation de ce dernier.

On améliore la dureté par une insolation du composant 1 aux UV.

Ce mode opératoire va être détaillé ci-après.

De préférence, pour réaliser un moule femelle 9 très précis, on réalise un modèle de précision correspondant au profil mâle de la surface inférieure 3 dans un matériau tel que le « SU8® » ou similaire, et on réalise avec ce modèle de précision un moule femelle souple 9 dans le second matériau de moulage 8. On choisit ce second matériau de moulage 8, pour réaliser un moule souple pour le moulage du premier matériau de moulage 5 et pour autoriser son démoulage, parmi le « PDMS® » ou le polyméthylsiloxane.

Le moule femelle 9 comporte de préférence :
- une première surface de contact 10 constituant un moule femelle de la surface inférieure 3 ;
- autour de la première surface de contact 10, un rebord 11 comportant une première surface d'appui 12 agencée pour coopérer de façon complémentaire avec la surface de contact 7 de la plaque 6;
- et une deuxième surface d'appui 13 opposée à la première surface 10.

On réalise dans le moule femelle 9 un réseau capillaire 14 d'injection et de dégazage;

On applique de préférence la deuxième surface d'appui 13 du moule femelle 9 sur une plaque support 15. Pour faciliter l'automatisation, cette plaque support 15 est de préférence rigide. Quand elle est choisie transparente dans une version avantageuse de l'invention, elle peut être réalisée en verre ou similaire.

On réalise une plaque 6 dont une surface de contact 7 est le négatif de la surface supérieure 2 ; cette plaque 6 est formée d'un matériau facilitant la séparation du composant 1 une fois polymérisé. Pour faciliter l'automatisation du procédé, cette plaque 6 est avantageusement rigide. Quand elle est choisie transparente dans une version avantageuse de l'invention, elle peut être réalisée en verre ou similaire. Naturellement, elle peut aussi être réalisée dans le même second matériau de moulage 8, et être alors rapportée sur une plaque support non représentée sur les figures.

On positionne, à une distance de la première surface 10 correspondant à l'épaisseur requise pour le composant 1, et exactement positionnée par rapport à la première surface 10, à l'aide de centrages, locatings ou similaires, la plaque 6 avec sa surface de contact 7 faisant face à la première surface de contact 10 du moule femelle 9, avec la première surface d'appui 12 en contact étanche avec la surface de contact 7 de la plaque 6.

On injecte au travers du réseau capillaire d'injection 14 le premier matériau de moulage 5, de façon à remplir entièrement du premier matériau de moulage 5 une cavité 17 délimitée par la surface de contact 7 de la plaque 6, la première surface de contact 10 du moule femelle 9 et le rebord 11 en appui étanche par sa première surface d'appui 12 sur la surface de contact 7. On veille à dégazer complètement la cavité 17, de façon à ce qu'aucune bulle d'air ne subsiste.

On laisse se polymériser le premier matériau 5 injecté dans la cavité 17 jusqu'à l'obtention d'un composant 1 rigide. Cette polymérisation naturelle peut s'accompagner d'un chauffage H, ou/et d'une insolation J aux rayons ultra-violets dits ci-après UV, qui ont chacun pour effet d'augmenter la durée superficielle du composant 1 obtenu, en effectuant la réticulation définitive du système. L'insolation apporte un supplément de dureté notable, d'environ 10%, par rapport au même composant polymérisé à l'ambiante, soit polymérisé avec chauffage, et, dans ce dernier cas, d'une dureté superficielle déjà supérieure à celle du même composant polymérisé à l'ambiante.

Après polymérisation, on éloigne la plaque 6 et la plaque support 15. On comprend qu'il est possible d'effectuer un chauffage complémentaire ou/et une insolation aussi bien quand le composant 1 est enfermé dans la cavité 17 définie par les outillages, que quand il en est extrait. La durée d'un cycle d'injection et de polymérisation avec chauffage est brève, de l'ordre de 30 à 40 secondes. Le cycle d'insolation a une durée de 10 à 20 secondes.

Dans une réalisation préférée, on fait une chauffe de polymérisation quand le composant 1 est encore dans l'outillage, le choix de l'insolation en ou hors outillage dépend essentiellement des contraintes de cycle de production : dans un cas les outillages sont immobilisés un peu plus longtemps avant le formage du composant suivant, dans l'autre cas une manipulation annexe est requise. Dans ce cas, on soumet le premier matériau 5 injecté dans la cavité 17, pendant sa polymérisation, à une température inférieure à 150 °C, voisine de 110 °C, notamment comprise entre 100°C et 120 °C, pendant 10 à 20 secondes.

Dans une variante avantageuse, on réalise un refroidissement à température ambiante au moins aussi brusque que la chauffe, pendant une durée inférieure à 20 secondes.

On détache facilement le composant 1 du moule femelle souple 9 par simple déformation de ce dernier.

De façon avantageuse, pour améliorer encore la dureté superficielle du composant 1 obtenu par la mise en oeuvre du procédé, on procède à son insolation par un rayonnement ultra-violet.

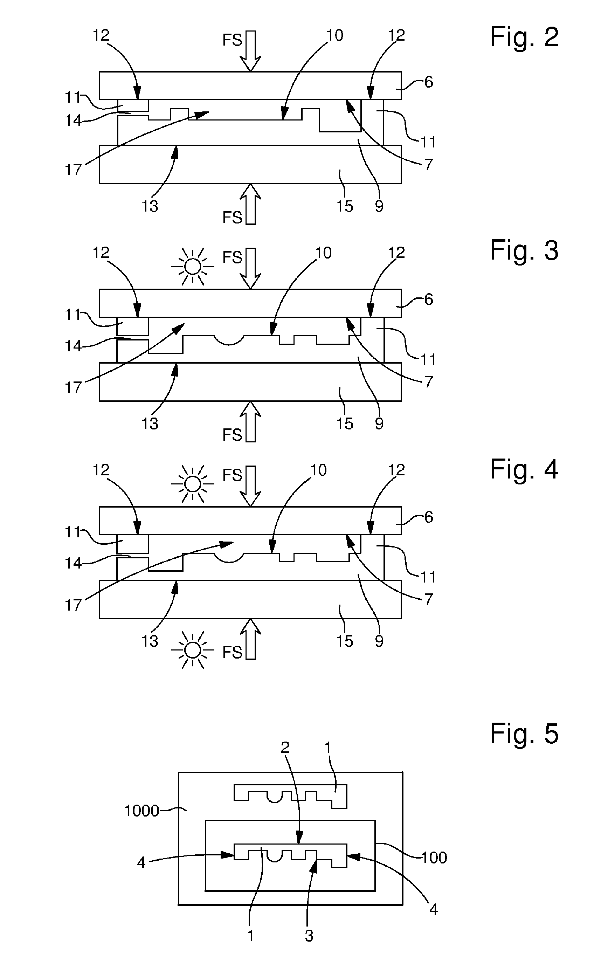

A cet effet, dans une deuxième variante, tel que visible sur la figure 3:
- on réalise la plaque 6 transparente aux rayons ultra-violets ;
- après injection du premier matériau de moulage 5, on insole le composant 1 par un rayonnement ultra-violet, ou bien au travers de la plaque transparente 6, ou bien après extraction du composant 1 polymérisé de la cavité 17, pour obtenir une dureté améliorée du composant 1 rigide.

De façon similaire et avantageuse, pour améliorer encore la dureté superficielle du composant 1 obtenu par la mise en oeuvre du procédé, on procède à son insolation sur toutes ses faces par un rayonnement ultra-violet.

A cet effet, dans une troisième variante, tel que visible sur la figure 4:
- on choisit le second matériau de moulage 8 transparent aux rayons ultra-violets de façon à obtenir un moule femelle souple 9 transparent aux rayons ultra-violets, et on choisit la plaque support 15 transparente aux rayons ultra-violets, de façon à insoler le composant 1 par un rayonnement ultra-violet, en plus de la insolation au travers de la plaque transparente 6, le premier matériau 5 injecté dans la cavité 17, au travers de la plaque support 15 et du moule femelle souple 9, pour obtenir une dureté améliorée du composant 1 rigide.

Avec les choix de matériaux proposés ici, compte tenu des propriétés de grande fluidité, à l'état non polymérisé, du produit« Cover Form ® », il n'est pas nécessaire de procéder à une injection à haute pression, car la mouillabilité de ce matériau est suffisante pour lui permettre d'occuper parfaitement et précisément la totalité de la cavité 17, à condition bien entendu que le réseau capillaire 14 soit bien réalisé de façon à assurer un dégazage complet et l'absence de toute bulle d'air. On peut ainsi effectuer l'injection du premier matériau de moulage 5 à une pression inférieure à 150 MPa, et en particulier à basse pression, notamment inférieure à 10 MPa.

Dans une variante avantageuse de mise en oeuvre de l'invention, on applique une force de serrage FS sur la plaque 6 et sur la plaque d'appui 15 pendant l'injection du premier matériau de moulage 5 dans la cavité 17, et pendant la polymérisation du premier matériau de moulage 5 pour la réalisation du composant 1.

Dans une exécution particulière, quand le composant 1 comporte une surface supérieure 2 plane, on réalise la plaque 6 avec au moins sa surface de contact 7 plane, et on réalise le moule femelle souple 9 avec son rebord 11 comportant une première surface d'appui 12 plane.

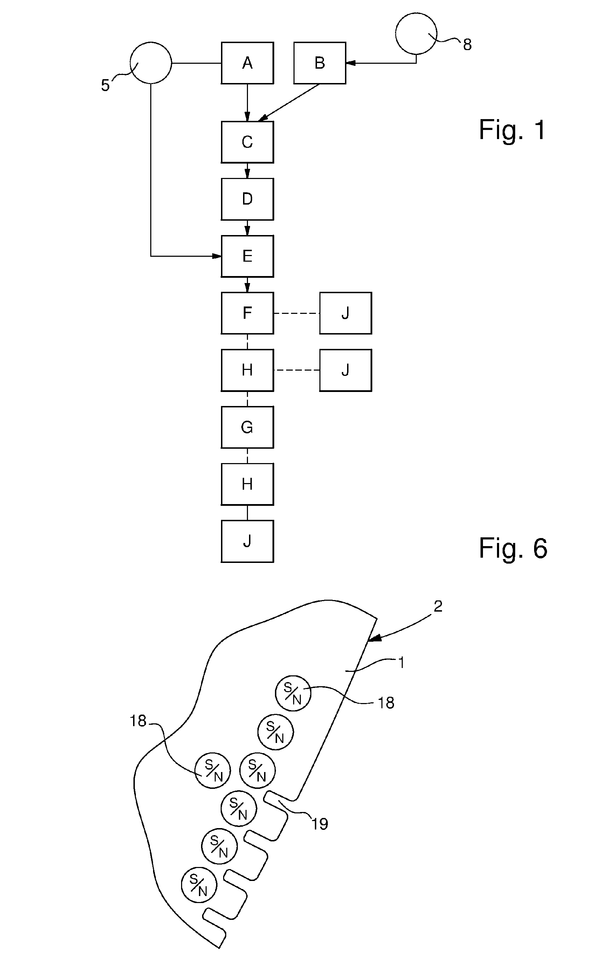

La figure 6 illustre une réalisation particulière, dans laquelle on insère dans la cavité 17 formant moule, soit avant l'injection du premier matériau de moulage 5, soit pendant ou après cette injection, des nodules 18 comportant chacun un noyau électrisable ou/et magnétisable ou/et électrisé ou/et magnétisé, notamment de type électrets, ferrites, aimants néodyme, ou similaires. L'électrisation ou l'aimantation peut être préalable ou postérieure à l'injection. La figure 6 illustre par exemple des particules aimantées après la polymérisation complète du premier matériau de moulage 5, notamment du «Cover Form ® ». Cette figure 6 illustre aussi, dans une zone de la surface supérieure 2, des alvéoles 19 agencées pour la lubrification. La surface de contact 7 de la plaque 6 est alors aménagée en conséquence.

Dans une autre variante, un matériau lubrifiant est mélangé au premier matériau de moulage 5, de façon analogue aux nodules 18 ci-dessus.

L'invention concerne encore l'application de ce procédé à la confection d'un composant d'horlogerie 1 choisi parmi : glace, couronne, carrure, platine, pont, roue, roue d'échappement, ancre, roue, masse oscillante, logement de palier, amortisseur anti-choc, cette liste n'étant nullement limitative.

L'invention concerne encore un mouvement d'horlogerie 100 comportant au moins un composant 1 réalisé selon ce procédé.

L'invention concerne encore une pièce d'horlogerie 1000 comportant au moins un composant 1 réalisé selon ce procédé, ou au moins un tel mouvement 100 selon l'une des revendications 1 à 9.

Dans une réalisation particulière, cette pièce d'horlogerie 1000 est une pièce d'horlogerie dite mystérieuse comportant au moins une platine réalisée selon ce procédé.

Dans une autre réalisation particulière, cette pièce d'horlogerie 1000 comporte une lunette à facettes en taille de joaillerie réalisée selon ce procédé.

L'invention permet d'obtenir des composants d'une grande transparence, d'une dureté superficielle supérieure à celle des matières plastiques moulées usuelles, de dureté durable. Le comportement aux rayures est très bon. En utilisant comme premier matériau de moulage 5 du «Cover Form ® », avec une chauffe inférieure à 130°C et un durcissement UV, on obtient une dureté, qui, classée sur l'échelle des mines graphites d'écriture est au niveau 7H, à comparer avec une dureté 2H d'un PMMA standard ayant reçu un traitement anti-rayures, ou encore avec une dureté HB d'un polyamide.

Le composant ainsi réalisé n'est pas rayable par la laine de verre.

Avec l'emploi de moules de qualité de réalisation soignée, le polissage du composant après fabrication n'est pas nécessaire.

## Revendications

1. Procédé de formage d'un composant d'horlogerie (1) transparent, monobloc et monocouche comportant une surface supérieure (2) et une surface inférieure (3) reliées par un bord (4), ledit bord (4) s'étendant selon l'épaisseur dudit composant (1), **caractérisé en ce que** :
- on choisit, parmi le « Cover Form ® » de « Evonik Röhm ® » ou le « Nanocryl® » de « Hanse Chemie® » ou un polymétacrylate ou un polyacryl, un premier matériau de moulage (5) transparent et polymérisable pour la réalisation dudit composant (1) ;
- on choisit, parmi le « PDMS® » ou le polyméthylsiloxane, un second matériau de moulage (8), pour réaliser un moule souple pour le moulage dudit premier matériau de moulage (5) et pour autoriser son démoulage ;
- on réalise une plaque (6) dont une surface de contact (7) est le négatif de ladite surface supérieure (2) ;
- on réalise un moule femelle souple (9) dans ledit second matériau de moulage (8), ledit moule femelle (9) comportant :
- une première surface de contact (10) constituant un moule femelle de ladite surface inférieure (3) ;
- autour de ladite première surface de contact (10), un rebord (11) comportant une première surface d'appui (12) agencée pour coopérer de façon complémentaire avec ladite surface de contact (7) de ladite plaque (6);
- et une deuxième surface d'appui (13) opposée à ladite première surface (10) ;
- on réalise dans ledit moule femelle (9) un réseau capillaire (14) d'injection et de dégazage;
- on applique ladite deuxième surface d'appui (13) dudit moule femelle (9) sur une plaque support (15) ;
- on positionne, à une distance de ladite première surface (10) correspondant à l'épaisseur requise pour ledit composant (1), et exactement positionnée par rapport à ladite première surface (10), ladite plaque (6) avec sa dite surface de contact (7) faisant face à ladite première surface de contact (10) dudit moule femelle (9), avec ladite première surface d'appui (12) en contact étanche avec ladite surface de contact (7) de ladite plaque (6);
- on injecte au travers dudit réseau capillaire d'injection (14) ledit premier matériau de moulage (5), de façon à remplir entièrement dudit premier matériau de moulage (5) une cavité (17) délimitée par ladite surface de contact (7) de ladite plaque (6), ladite première surface de contact (10) dudit moule femelle (9) et ledit rebord (11) en appui étanche par sa dite première surface d'appui (12) sur ladite surface de contact (7) ;
- on laisse se polymériser ledit premier matériau (5) injecté dans ladite cavité (17) jusqu'à l'obtention d'un dit composant (1) rigide;
- on éloigne ladite plaque (6) et ladite plaque support (15) ;
- on détache ledit composant (1) dudit moule femelle souple (9) par déformation de ce dernier.

2. Procédé de formage d'un composant d'horlogerie (1) selon la revendication 1, **caractérisé en ce qu'**on choisit ledit matériau « Cover Form ® » de « Evonik Röhm ® » comme dit premier matériau de moulage (5) polymérisable pour la réalisation dudit composant (1).

3. Procédé de formage d'un composant d'horlogerie (1) selon la revendication 1 ou 2, **caractérisé en ce que** on soumet ledit premier matériau (5) injecté dans ladite cavité (17), pendant sa polymérisation, à une température comprise entre 100 °C et 120 °C, pendant 10 à 20 secondes.

4. Procédé de formage d'un composant d'horlogerie (1) selon l'une des revendications précédentes, **caractérisé en ce que**, après injection dudit premier matériau de moulage (5), on insole ledit composant (1) par un rayonnement ultra-violet, ou bien au travers de ladite plaque (6) réalisée sous forme d'une plaque transparente aux rayons ultra-violets, ou bien après extraction dudit composant (1) polymérisé de ladite cavité (17), pour obtenir une dureté améliorée dudit composant (1) rigide.

5. Procédé de formage d'un composant d'horlogerie (1) selon la revendication précédente, **caractérisé en ce qu'**on choisit ledit second matériau de moulage (8) transparent aux rayons ultra-violets de façon à obtenir un dit moule femelle souple (9) transparent aux rayons ultra-violets, et **en ce qu'**on choisit ladite plaque support (15) transparente aux rayons ultra-violets, de façon à insoler ledit composant (1) par un rayonnement ultra-violet, en plus de ladite insolation au travers de ladite plaque transparente (6), ledit premier matériau (5) injecté dans ladite cavité (17), au travers de ladite plaque support (15) et dudit moule femelle souple (9), pour obtenir une dureté améliorée dudit composant (1) rigide.

6. Procédé de formage d'un composant d'horlogerie (1) selon l'une des revendications précédentes, **caractérisé en ce qu'**on choisit le dit matériau « PDMS® », comme dit second matériau de moulage (8).

7. Procédé de formage d'un composant d'horlogerie (1) selon l'une des revendications précédentes, **caractérisé en ce qu'**on applique une force de serrage sur ladite plaque (6) et sur ladite plaque d'appui (15) pendant l'injection dudit premier matériau de moulage (5) dans ladite cavité (17), et pendant la polymérisation dudit premier matériau de moulage (5) pour la réalisation dudit composant (1).

8. Procédé de formage d'un composant d'horlogerie (1) selon l'une des revendications précédentes, **caractérisé en ce qu'**on réalise ledit composant (1) avec ladite surface supérieure (2) plane, et qu'on réalise ladite plaque (6) avec au moins sa dite surface de contact (7) plane, et **en ce qu'**on réalise ledit moule femelle souple (9) avec son dit rebord (11) comportant une première surface d'appui (12) plane.

9. Procédé de formage d'un composant d'horlogerie (1) selon l'une des revendications précédentes, **caractérisé en ce qu'**on on insère dans ladite cavité (17), soit avant l'injection du premier matériau de moulage (5), soit pendant ou après cette injection, des nodules (18) comportant chacun un noyau électrisable ou/et magnétisable ou/et électrisé ou/et magnétisé, l'électrisation ou l'aimantation étant préalable ou postérieure à l'injection.

10. Application du procédé selon l'une des revendications précédentes à la confection d'un composant d'horlogerie (1) choisi parmi :
glace, couronne, carrure, platine, pont, roue, roue d'échappement, ancre, masse oscillante, logement de palier, amortisseur anti-choc.

11. Mouvement d'horlogerie (100) comportant au moins un composant (1) réalisé selon le procédé selon l'une des revendications 1 à 9.

12. Pièce d'horlogerie (1000) comportant au moins un composant (1) réalisé selon le procédé selon l'une des revendications 1 à 9.

13. Pièce d'horlogerie (1000) dite mystérieuse comportant au moins une platine réalisée selon le procédé selon l'une des revendications 1 à 9.
